# DEMANDE DE BREVET EUROPEEN

(11) **EP 2 357 117 A1**
(43) Date de publication de la demande: **17.08.2011**
(21) Numéro de dépôt: 11305081.9
(22) Date de dépôt: 26.01.2011
(51) Int. Cl.: B62B 3/06, B60P 1/64, B62D 53/00

(54) **Dispositif de chariot composite à deux composantes**

(30) Priorité: 03.02.2010 FR 1050757
(71) Demandeur: Industrie de Thermoformage et Mécano Soudure (Société Anonyme), 25110 Baume les Dames (FR)
(72) Inventeur: Maillard, Eric, 25220, ARCIER (FR)
(74) Mandataire: Nuss, Laurent

(57) **Abrégé**

La présente invention a pour objet un dispositif (1) de chariot composite à deux composantes (2,3), comprenant un chariot mère (2) et un chariot fille (3), indépendants et équipés tous deux de moyens de roulement (4,5), dispositif dans lequel le chariot fille peut être embarqué sur et débarqué du chariot mère par engagement/désengagement transversal dudit chariot fille par rapport audit chariot mère, ledit chariot mère (2) comportant un emplacement de réception (6) et des moyens (7) de support et de guidage dudit chariot fille,
le chariot mère (2) étant équipé de moyens (7) de support avec coulissement du châssis (9) du chariot fille (3), le chariot fille (3) étant pourvu de moyens de roulement (5) repliables et comportant au moins un mécanisme (10) de verrouillage et de déverrouillage automatiques et contrôlés des moyens de roulement (5) en position dépliée de roulement, coopérant mécaniquement avec des moyens (11) fonctionnellement complémentaires du chariot mère (2) et autorisant un repliement des moyens de roulement (5) du chariot fille (3) lors de l'engagement de ce dernier dans l'emplacement de réception (6) du chariot mère (2).

## Description

La présente invention concerne le domaine du transport de produits, d'articles ou de pièces, en particulier le transport de tels éléments dans des sites industriels de production et de montage, par exemple pour l'alimentation de chaînes d'assemblage.

La présente invention a plus spécifiquement pour objet un dispositif de chariot composite à deux composantes, destiné notamment à l'approvisionnement de chaînes d'assemblage, par exemple dans le domaine de la fabrication de véhicules automobiles.

De manière générale, l'approvisionnement en pièces et composants, ainsi qu'éventuellement l'évacuation des rebuts, déchets ou parties à recycler, au niveau des chaînes de production ou de montage, s'effectue à l'aide de chariots élévateurs aptes à déplacer des conteneurs ou récipients analogues contenant les pièces, parties ou composants visés en vrac ou de manière ordonnée. Ces conteneurs présentent généralement une embase en forme de palette.

Néanmoins, le coût de la mise en oeuvre d'un chariot élévateur est élevé et nécessite un personnel qualifié pour sa manoeuvre.

De plus, chaque chariot élévateur ne peut généralement transporter qu'un seul conteneur, sauf à les gerber (risque accru d'accident, contraire à la réglementation), d'où il résulte une productivité faible et une efficacité limitée, nécessitant la multiplication desdits chariots sur un même site, ainsi que des conducteurs correspondants.

Pour tenter de pallier ces inconvénients, il a été proposé récemment de mettre en oeuvre des chariots composites comprenant un chariot principal ou "mère" et un chariot secondaire ou "fille", indépendants et équipés tous deux de moyens de roulement, dispositif dans lequel le chariot fille peut être embarqué sur et débarqué du chariot mère par engagement/désengagement transversal dudit chariot fille par rapport audit chariot mère, ledit chariot mère comportant un emplacement de réception et des moyens de support et de guidage dudit chariot fille.

Les chariots principaux ou mère peuvent être assemblés en trains aptes à circuler le long des chaînes d'assemblage et les chariots secondaires ou fille sont embarqués ou débarqués en fonction des besoins des postes de la chaîne au niveau desquels les chariots principaux concernés du train sont successivement arrêtés.

On obtient ainsi un train de chariots principaux porteurs dirigé par un unique conducteur, les chariots secondaires transportés par ces chariots principaux étant engagés et dégagés desdits chariots principaux par un déplacement perpendiculaire par rapport à l'axe longitudinal de ces derniers.

De tels chariots composites, avec une composante porteuse "mère" et une composante embarquée "fille", sont notamment connus par les documents WO-A-2009/036750, DE-A-10156601 et EP-A-1 352 815, lesquels correspondent sensiblement au préambule de la revendication 1 et peuvent comporter, en outre, au niveau des chariots mère et fille, des moyens mutuellement coopérant de verrouillage amovible à l'état embarqué du chariot fille.

Néanmoins, ces chariots composites existants présentent une constitution compliquée, une garde au sol faible et/ou mettent en oeuvre des mécanismes complexes de chargement/déchargement des chariots secondaires, les moyens de roulement de ces derniers pouvant éventuellement gêner le déplacement des chariots mères.

Par ailleurs, par le document EP-A-2 161 182, constituant un document de l'état de la technique au sens de l'article 54(3) CBE, on connaît également un chariot composite selon le préambule de la revendication 1, dans lequel le chariot mère est équipé d'un moyen actif de soulèvement du chariot fille en vue de son embarquement, nécessitant une alimentation en puissance externe, par exemple pneumatique.

La présente invention a pour but de pallier au moins certaines des limitations précitées.

A cet effet, elle a pour objet un dispositif de chariot composite comprenant un chariot principal ou mère et un chariot secondaire ou fille, indépendants et équipés tous deux de moyens de roulement, dispositif dans lequel le chariot fille peut être embarqué sur et débarqué du chariot mère par engagement/désengagement transversal dudit chariot fille par rapport audit chariot mère, ledit chariot mère comportant un emplacement de réception et des moyens de support et de guidage dudit chariot fille,
chariot composite **caractérisé en ce que** le chariot mère est équipé de moyens de support avec coulissement du châssis ou du plateau du chariot fille et en ce que le chariot fille est pourvu de moyens de roulement repliables ou relevables et comporte au moins un mécanisme de verrouillage et de déverrouillage et/ou de repliement ou de soulèvement automatiques et contrôlés des moyens de roulement au moins en ou depuis la position dépliée ou abaissée de roulement, coopérant mécaniquement avec des moyens fonctionnellement complémentaires du chariot mère et autorisant un repliement ou un soulèvement des moyens de roulement du chariot fille lors de l'engagement de ce dernier dans l'emplacement de réception du chariot mère.

L'invention sera mieux comprise, grâce à la description ci-après, qui se rapporte à un mode de réalisation préféré, donné à titre d'exemple non limitatif, et expliqué avec référence aux dessins schématiques annexés, dans lesquels :
Les figures 1 et 2 sont des vues en perspective d'un dispositif de chariot composite selon l'invention, les chariots mère et fille étant respectivement à l'état séparé et désengagé (figure 1) et à l'état monté et entièrement engagé pour former une unité de chariot composite (figure 2), seules deux roues (les roues du côté gauche) du chariot mère étant représentées et le plateau ou contenant équipant normalement le chariot fille n'étant pas représenté pour des raisons de clarté des figures) ;
Les figures 3 et 4 sont des vues en perspective respectivement du chariot mère (figure 3) et du chariot fille (figure 4) faisant partie du chariot composite des figures 1 et 2 ;
Les figures 5A à 5C illustrent trois phases successives du début de l'engagement d'un chariot fille dans un chariot mère, et,
Les figures 6A à 6C sont des représentations à une échelle différente du détail M de la figure 5A, illustrant les états successifs du mécanisme de verrouillage/déverrouillage du chariot fille en relation avec les trois phases de début d'engagement illustrées sur les figures 5A à 5C.

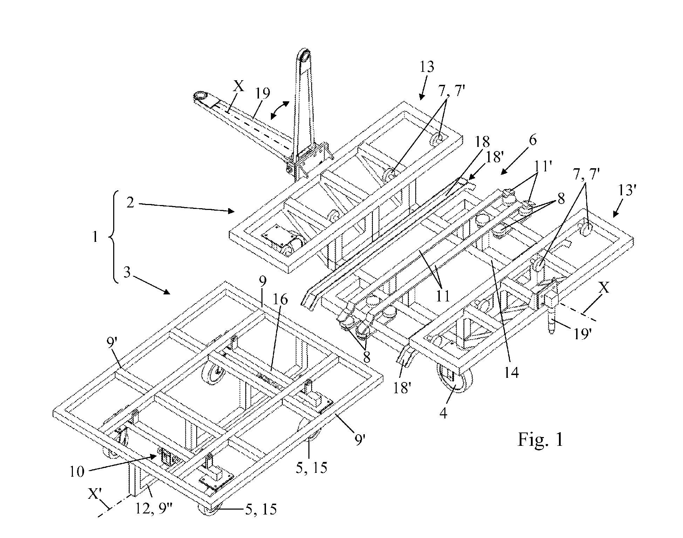

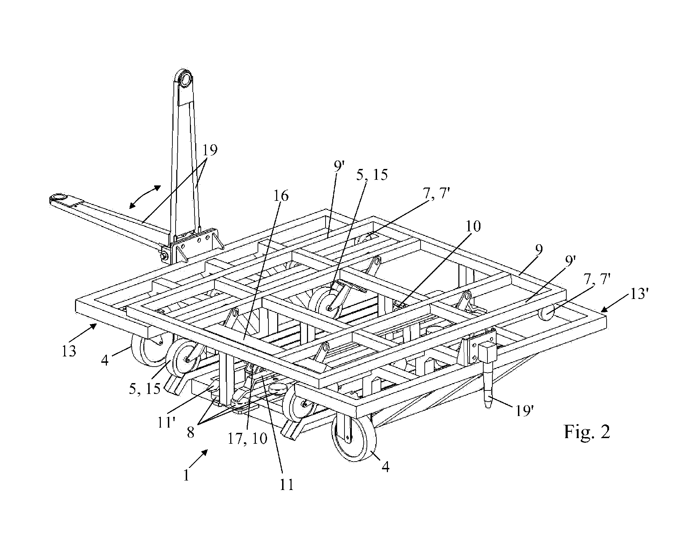

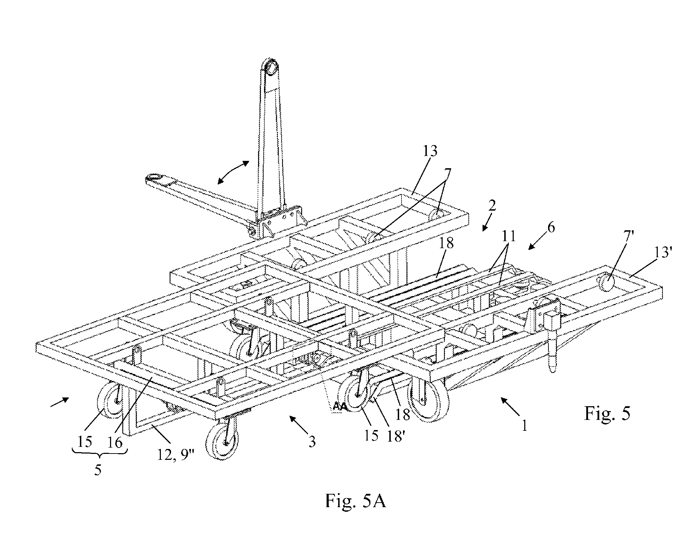

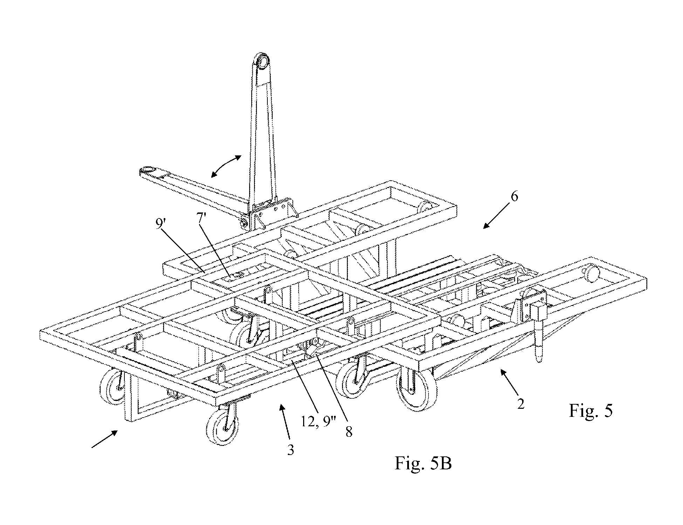

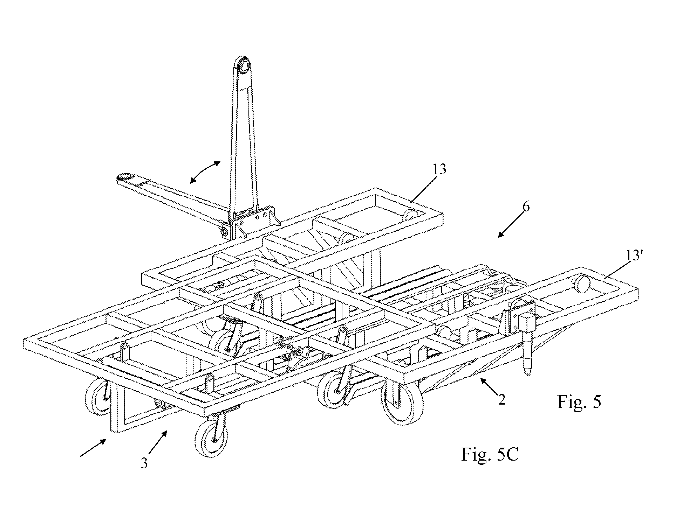

Les figures 1 à 5 montrent partiellement ou en totalité un dispositif ou une unité de chariot composite 1 comprenant un chariot principal ou mère et un chariot secondaire ou fille, indépendants et équipés tous deux de moyens de roulement, dispositif dans lequel le chariot fille peut être embarqué sur et débarqué du chariot mère par engagement/désengagement transversal dudit chariot fille par rapport audit chariot mère, ledit chariot mère comportant un emplacement de réception et des moyens de support et de guidage dudit chariot fille.

Conformément à l'invention, le chariot mère 2 est équipé de moyens 7 de support avec coulissement du châssis ou du plateau 9 du chariot fille 3 et le chariot fille 3 est pourvu de moyens de roulement 5 repliables ou relevables et comporte au moins un mécanisme 10 de verrouillage et de déverrouillage et/ou de repliement ou de soulèvement automatiques et contrôlés des moyens de roulement 5 au moins dans leur ou depuis leur position dépliée ou abaissée de roulement, coopérant mécaniquement avec des moyens 11 fonctionnellement complémentaires du chariot mère 2 et autorisant un repliement ou un soulèvement des moyens de roulement 5 du chariot fille 3 lors de l'engagement de ce dernier dans l'emplacement de réception 6 du chariot mère 2.

Ces dispositions évitent tout recours à un mouvement d'élévation du chariot fille 3 lors de son embarquement sur le chariot mère 2 et permettant un transfert de charge progressif, sécurisé et contrôlé, fonction du degré "d'enfoncement" ou "d'imbrication" du chariot fille 3 dans le chariot mère 2, en mettant préférentiellement en oeuvre des moyens mécaniques ne nécessitant aucune alimentation externe.

Le positionnement en hauteur du châssis ou plateau 9 du chariot fille 3 lorsqu'il est supporté par les moyens de roulement 5 et lorsqu'il repose sur les moyens 7 de support avec coulissement du chariot mère demeure sensiblement inchangé, ce afin de limiter l'effort à appliquer pour les manoeuvres d'engagement et de désengagement des deux chariots 2 et 3 (ces manoeuvres peuvent ainsi être effectuées aisément par un opérateur, sans aucune motorisation).

Du fait du repliement ou du soulèvement des moyens de roulement 5 du chariot fille 3, lors de son engagement ou de son embarquement dans le chariot mère 2, associé au mode de support dudit chariot fille 3 dans le chariot mère 2, il est possible de limiter la profondeur de l'emplacement de réception 6 et donc de conserver une garde au sol importante pour le chariot mère 2, ce tout en respectant une hauteur de support minimale requise pour le plateau ou le cadre du châssis 9 du chariot fille 3, lorsque ce dernier repose sur ses propres moyens de roulement 5.

De même, il est possible de mettre en oeuvre une structure de châssis 14' renforcée (longerons 14 plus épais) tout en conservant une valeur de garde au sol suffisante pour une utilisation sécurisée.

Enfin, l'absence d'interférence des moyens de roulement 7 du chariot fille 3 (à l'état embarqué) avec le déplacement du chariot mère 2, est garantie.

Afin d'aboutir systématiquement à un montage précis et contrôlé du chariot fille 3 dans le chariot mère 2, sans requérir de précaution particulière de la part de l'opérateur, il peut être prévu que le chariot fille 3 comporte au moins un élément de guidage 12 assurant, en coopération avec les moyens complémentaires de guidage 8 du chariot mère 2, un déplacement guidé dudit chariot fille 3 lors de ses manoeuvres d'engagement et de désengagement et un maintien à l'état monté dans le chariot mère 2, de manière à obtenir un positionnement relatif chariot mère 2/chariot fille 3 tel que les moyens de support 7 avec faculté de coulissement coopèrent avec des parties 9' correspondantes du châssis ou du plateau 9 et que le ou chaque mécanisme 10 de verrouillage/déverrouillage coopère avec son moyen fonctionnellement complémentaire 11.

En accord avec une construction simple et robuste du chariot mère 2, autorisant une reprise d'efforts équilibrée et stable et présentant une grande résistance aux efforts de traction, le chariot mère 2 peut avantageusement présenter une constitution telle qu'il comporte une rampe ou un plateau support frontal(e) 13 et une rampe ou un plateau support arrière 13', supporté(e) chacun(e) par des moyens de roulement 4, portant chacun(e) des moyens de support avec coulissement 7 et séparé(e)s mutuellement par une zone centrale dégagée du chariot mère 2, lesdites rampes ou plateaux support 13 et 13' étant relié(e)s rigidement par des longerons inférieurs 14 du châssis 14' s'étendant sous ladite zone centrale dégagée formant l'emplacement de réception 6 dudit chariot fille 3.

En vue d'augmenter la polyvalence d'utilisation du chariot composite 1 selon l'invention, il peut être prévu que l'emplacement de réception 6 est ouvert latéralement sur les deux côtés longitudinaux du chariot mère 2 et que les moyens 7, 8 de support et de guidage, ainsi qu'éventuellement les moyens 11 fonctionnellement complémentaires du ou des mécanisme(s) 10 de verrouillage/déverrouillage présentent une répartition ou disposition symétrique par rapport à l'axe longitudinal médian X dudit chariot mère 2, de manière à permettre un engagement et un désengagement similaire du chariot fille 3 indifféremment des deux côtés du chariot mère 2.

Conformément à une caractéristique avantageuse de l'invention, les mouvements de repliement/dépliement des moyens de roulement 4 du chariot fille 3, l'actionnement du ou des mécanisme(s) 10 de verrouillage/déverrouillage desdits moyens de roulement 3 en position dépliée et les mouvements transversaux d'engagement et de désengagement par coulissement guidé et supporté du chariot fille 3 sont induits par le déplacement dudit chariot fille 3 lors de son engagement ou désengagement du chariot mère 2, ce de manière mécanique.

Ainsi, aucun actionneur, ni aucune source de puissance n'est nécessaire et la manipulation du chariot fille 3 peut être effectuée manuellement par un opérateur, en vue du déplacement de ce chariot et de son engagement/dégagement du chariot mère 2.

En accord avec un mode de réalisation préféré de l'invention, ressortant notamment des figures 1 à 3 et 5 des dessins annexés, les moyens 7 de support avec coulissement du chariot mère 2 consistent en deux alignements transversaux de galets rotatifs 7', montés sur le châssis 14' du chariot mère 2 de part et d'autre de l'emplacement de réception 6 du chariot fille 3 et destinés à fournir des chemins de roulement à deux longerons 9' du cadre du châssis 9 du chariot fille 3, le chariot mère 2 comportant, en outre, un moyen de blocage ou de verrouillage amovible du chariot fille 3 dans sa position de montage centrée (moyen non représenté).

Conformément à une variante de réalisation préférée du chariot fille 3 et comme le montrent les figures 1, 2, 4 et 5 des dessins annexés, les moyens de roulement 5 du chariot fille 3 consistent en deux paires de roues 15 avant et arrière, chaque paire étant associée à une traverse 16 montée pivotante sur le châssis 9 du chariot fille 3 et comportant un mécanisme de verrouillage/déverrouillage automatique 10.

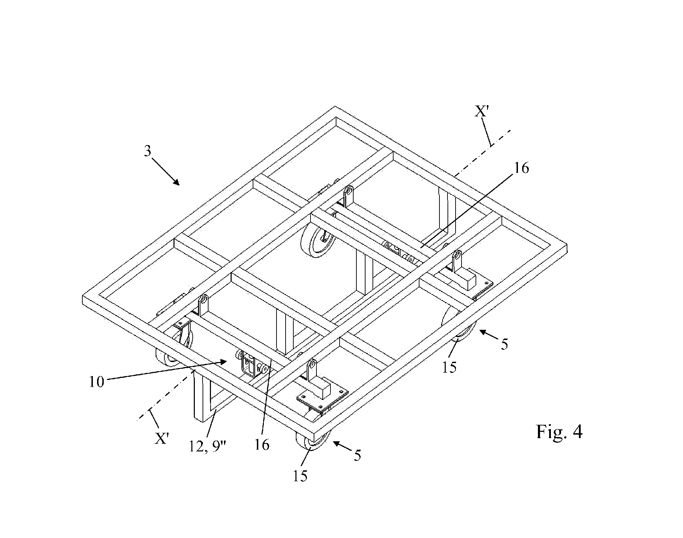

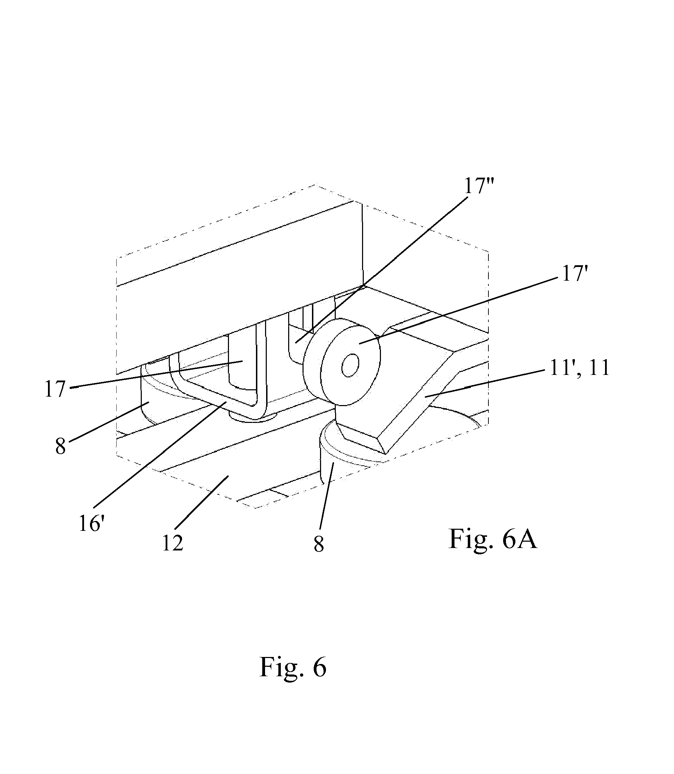

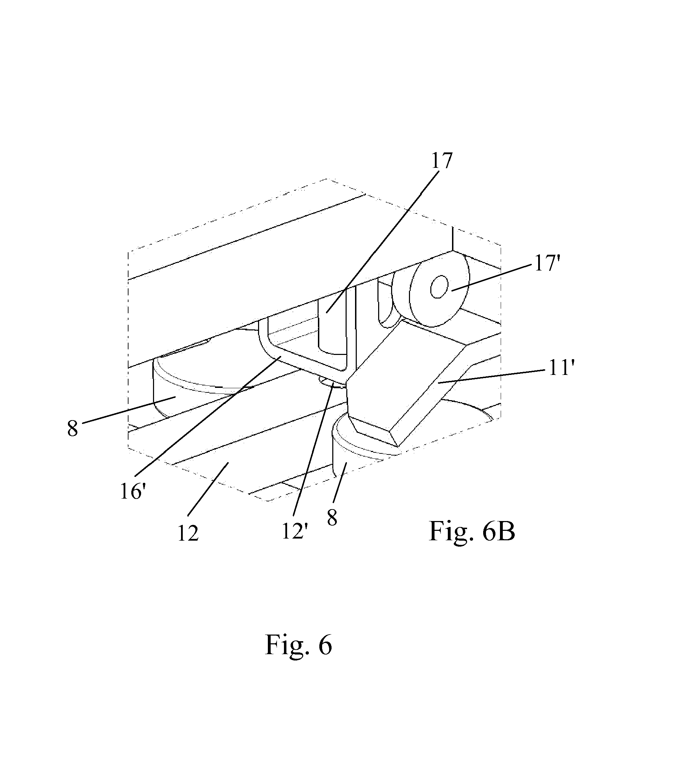

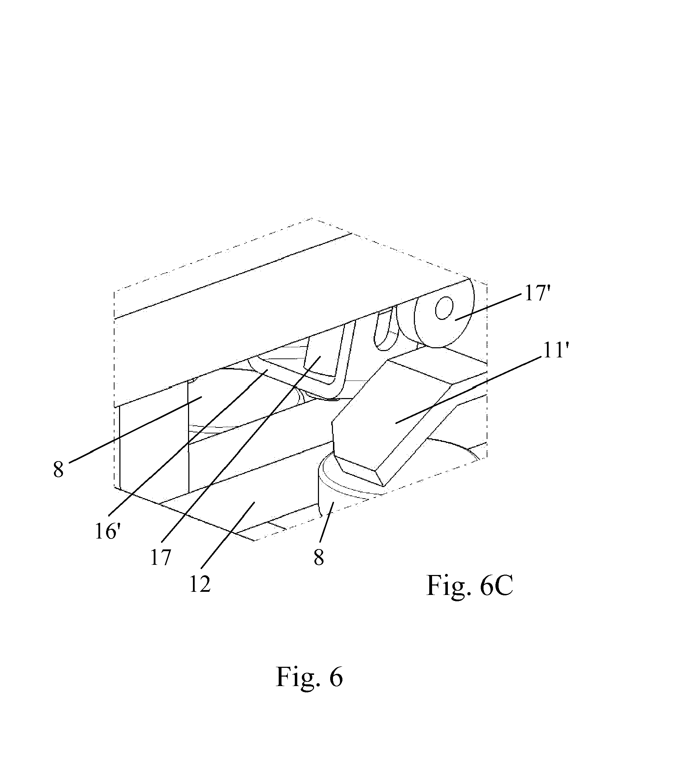

A titre d'exemple de réalisation pratique illustré en particulier sur les figures 4 et 6 des dessins annexés, chaque mécanisme 10 de verrouillage/déverrouillage consiste en un verrou 17 associé à deux galets opposés 17' par un axe de rotation 17", ces parties formant un ensemble mobile guidé en translation dans un corps creux 16' solidaire rigidement de la traverse 16 concernée, ce dans la direction de manoeuvre dudit verrou 17, ce dernier étant situé, en l'absence de contrainte et à l'état déployé de la paire de roues 15 associée, dans une position de verrouillage par engagement dans un élément fixe du châssis 9 et étant déplacé progressivement en position déverrouillée par roulement des galets 17' sur des portions d'extrémité en forme de rampes inclinées 11' des moyens 11 fonctionnellement complémentaires des mécanismes 10, sous forme de rails transversaux du chariot mère 2, la position déverrouillée étant atteinte immédiatement avant que les moyens de roulement 5 concernés ne commencent à être sollicités vers leur position repliée.

Selon une caractéristique additionnelle de l'invention ressortant également des figures 1 à 3 et 5 des dessins annexés, le chariot mère 2 comporte deux chemins de circulation 18 parallèles pour les paires de roues 15 des moyens de roulement 5, préférentiellement sous forme de rails de circulation guidée, s'étendant transversalement d'un côté à l'autre du chariot mère 2 dans l'emplacement de réception 6, et autorisant un roulement desdites roues 15 avec maintien en position repliée, chaque chemin de circulation 18 comportant à chacune de ses extrémités opposées une portion de rampe inclinée 18' destinée à provoquer, en fonction de la direction de déplacement du chariot fille 3, un repliement ou un déploiement progressif des paires de roues 15 lors de leur roulement sur ces portions de rampe 18', ce en synchronisme avec l'actionnement du mécanisme 10 de verrouillage/déverrouillage associé à la paire de roues 15 concernée.

Ainsi, lors de l'engagement du chariot fille 3 dans le chariot mère 2, le verrou 17 aura tout juste été déplacé en position de déverrouillage (position levée avec extraction de l'élément fixe du châssis 9) lorsque les roues 15 viennent en contact avec les portions de rampe inclinées 18' et que le repliement desdites roues est entamé (ces opérations synchronisées se répètent pour les deux ensembles [roues 15/traverses 16/mécanisme 10].

De même, lors du dégagement du chariot fille 3 d'avec le chariot mère 2, le verrou 17 s'engagera en position de verrouillage, sous l'action de la pesanteur lorsque les roues 15, associées au mécanisme 10 comprenant ce verrou, quitteront les portions de rampe inclinées 18', bloquant ainsi les roues 15 en position de roulement.

De manière alternative à la caractéristique additionnelle précitée, le verrouillage/déverrouillage et le repliement/soulèvement des roues 15 peuvent être réalisés par le même organe.

Ainsi, il peut être prévu que les moyens de roulement 5 sont déplacés en position repliée, et maintenus dans cette position, par action des ensembles [corps creux 16' / axe de rotation 17" / galets 17'] sur les traverses 16 correspondantes lorsque les galets 17' circulent en appui sur les rails 11, les roues 15 étant ainsi flottantes dès le début de leur repliement ou soulèvement et maintenues en position autour de leur axe de montage sur le châssis 9 du chariot fille 3 en circulant dans des rails 18 (les roues 15 étant des roues folles).

Conformément à une variante de construction permettant d'aboutir systématiquement à un montage précis du chariot fille 3 dans le chariot mère 2, l'élément de guidage 12 du chariot fille 3 consiste en une barre 9" s'étendant sous le plateau ou le châssis 9 dans la direction longitudinale X' dudit chariot fille 3 et les moyens 8 complémentaires de guidage du chariot mère 2 consistent en une ou des paires de rouleaux ou de galets montée(s) au moins au niveau de chaque côté longitudinal dudit chariot mère 2 et définissant entre eux un chemin de guidage transversal pour le chariot fille 3, de manière à ce que les axes longitudinaux X et X' des chariots mère et fille 2 et 3 soient perpendiculaires entre eux lors des mouvements d'engagement et de désengagement des deux chariots.

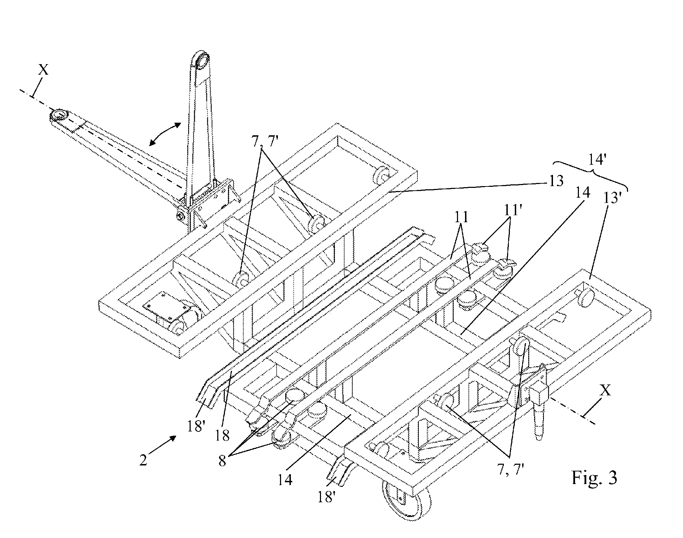

Selon des variantes alternatives non illustrées de l'invention, il peut également être prévu que le châssis 9 du chariot fille 3 soit équipé de deux alignements de galets porteur rotatifs 7' (au niveau des longerons latéraux 9') et que le châssis 14' du chariot mère 2 comporte des chemins de soulèvement de part et d'autre de l'emplacement de réception 6 (au niveau des longerons des rampes 13 et 13' portant les galets 7' sur les figures 1 et 3).

Il peut aussi être prévu que le chariot fille 3 comporte au moins deux galets de guidage, préférentiellement un train de galets de guidage, alignés (en lieu et place de la barre longitudinale 9") et que le chariot mère 2 présente deux rails de guidage transversaux parallèles et espacés entre lesquels ces galets peuvent circuler de manière guidée (non illustré).

De plus, deux trains de galets (au niveau du chariot fille 3) circulant de part et d'autre d'un unique rail de guidage du chariot mère 2 peuvent également être envisagés.

Selon une autre variante de réalisation non illustrée, le mouvement de repliement ou de soulèvement des moyens de roulement 5 peut s'effectuer par translation, verticale ou non, au lieu de s'effectuer par pivotement (comme le montrent les figures 1 à 6), le mécanisme 10 ou un autre système assurant cette fonction de soulèvement linéaire.

De manière avantageuse, l'élément fixe du châssis 9 du chariot fille 3 engagé par le verrou 17 de chaque mécanisme de verrouillage/déverrouillage 10, pour le blocage en position déployée des roues 15, correspond à l'élément de guidage 12 en forme de barre longitudinale 9", lequel est pourvu de sites d'ancrage ou d'orifices de réception 12' correspondants.

Enfin, comme le montrent les figures 1 à 5 des dessins annexés, le chariot mère 2 peut comprendre un timon frontal 19 pour son pilotage et son accrochage et un moyen d'accrochage 19', mâle ou femelle, arrière, permettant la réalisation de trains de chariots composites 1 par accrochages successifs.

Bien entendu, l'invention n'est pas limitée au mode de réalisation décrit et représenté aux dessins annexés. Des modifications restent possibles, notamment du point de vue de la constitution des divers éléments ou par substitution d'équivalents techniques, sans sortir pour autant du domaine de protection de l'invention tel que défini par les revendications.

## Revendications

1. Dispositif (1) de chariot composite comprenant un chariot principal ou mère (2) et un chariot secondaire ou fille (3), indépendants et équipés tous deux de moyens de roulement (4, 5), dispositif dans lequel le chariot fille peut être embarqué sur et débarqué du chariot mère par engagement/désengagement transversal dudit chariot fille par rapport audit chariot mère, ledit chariot mère (2) comportant un emplacement de réception (6) et des moyens (7, 8) de support et de guidage dudit chariot fille (3), et le chariot mère (2) étant équipé de moyens (7) de support avec coulissement du châssis ou du plateau (9) du chariot fille (3),
chariot composite (1) **caractérisé en ce que** le chariot fille (3) est pourvu de moyens de roulement (5) repliables ou relevables et comporte au moins un mécanisme (10) de verrouillage et de déverrouillage et/ou de repliement ou de soulèvement automatiques et contrôlés des moyens de roulement (5) au moins dans leur ou depuis leur position dépliée ou abaissée de roulement, coopérant mécaniquement avec des moyens (11) fonctionnellement complémentaires du chariot mère (2) et autorisant un repliement ou un soulèvement des moyens de roulement (5) du chariot fille (3) lors de l'engagement de ce dernier dans l'emplacement de réception (6) du chariot mère (2).

2. Dispositif de chariot composite selon la revendication 1, **caractérisé en ce que** le chariot fille (3) comporte au moins un élément de guidage (12) assurant, en coopération avec les moyens complémentaires de guidage (8) du chariot mère (2), un déplacement guidé dudit chariot fille (3) lors de ses manoeuvres d'engagement et de désengagement et un maintien à l'état monté dans le chariot mère (2), de manière à obtenir un positionnement relatif chariot mère (2)/chariot fille (3) tel que les moyens de support (7) avec faculté de coulissement coopèrent avec des parties (9') correspondantes du châssis ou du plateau (9) et que le ou chaque mécanisme (10) de verrouillage/déverrouillage coopère avec son moyen fonctionnellement complémentaire (11).

3. Dispositif de chariot composite selon l'une quelconque des revendications 1 et 2, **caractérisé en ce que** le chariot mère (2) comporte une rampe ou un plateau support frontal(e) (13) et une rampe ou un plateau support arrière (13'), supporté(e) chacun(e) par des moyens de roulement (4), portant chacun(e) des moyens de support avec coulissement (7) et séparé(e)s mutuellement par une zone centrale dégagée du chariot mère (2), lesdites rampes ou plateaux support (13 et 13') étant relié(e)s rigidement par des longerons inférieurs (14) du châssis (14') s'étendant sous ladite zone centrale dégagée formant l'emplacement de réception (6) dudit chariot fille (3).

4. Dispositif de chariot composite selon l'une quelconque des revendications 1 à 3, **caractérisé en ce que** l'emplacement de réception (6) est ouvert latéralement sur les deux côtés longitudinaux du chariot mère (2) et **en ce que** les moyens (7, 8) de support et de guidage, ainsi qu'éventuellement les moyens (11) fonctionnellement complémentaires du ou des mécanisme(s) (10) de verrouillage/déverrouillage présentent une répartition ou disposition symétrique par rapport à l'axe longitudinal médian (X) dudit chariot mère (2), de manière à permettre un engagement et un désengagement similaire du chariot fille (3) indifféremment des deux côtés du chariot mère (2).

5. Dispositif de chariot composite selon l'une quelconque des revendications 1 à 4, **caractérisé en ce que** les mouvements de repliement/dépliement des moyens de roulement (4) du chariot fille (3), l'actionnement du ou des mécanisme(s) (10) de verrouillage/déverrouillage desdits moyens de roulement (3) en position dépliée et les mouvements transversaux d'engagement et de désengagement par coulissement guidé et supporté du chariot fille (3) sont induits par le déplacement dudit chariot fille (3) lors de son engagement ou désengagement du chariot mère (2), ce de manière mécanique.

6. Dispositif de chariot composite selon l'une quelconque des revendications 1 à 5, **caractérisé en ce que** les moyens (7) de support avec coulissement du chariot mère (2) consistent en deux alignements transversaux de galets rotatifs (7'), montés sur le châssis (14') du chariot mère (2) de part et d'autre de l'emplacement de réception (6) du chariot fille (3) et destinés à fournir des chemins de roulement à deux longerons (9') du cadre du châssis (9) du chariot fille (3), le chariot mère (2) comportant, en outre, un moyen de blocage ou de verrouillage amovible du chariot fille (3) dans sa position de montage centrée.

7. Dispositif de chariot composite selon l'une quelconque des revendications 1 à 6, **caractérisé en ce que** les moyens de roulement (5) du chariot fille (3) consistent en deux paires de roues (15) avant et arrière, chaque paire étant associée à une traverse (16) montée pivotante ou avec faculté de soulèvement sur le châssis (9) du chariot fille (3) et comportant un mécanisme de verrouillage/déverrouillage automatique (10).

8. Dispositif de chariot composite selon la revendication 7, **caractérisé en ce que** chaque mécanisme (10) de verrouillage/déverrouillage consiste en un verrou (17) associé à deux galets opposés (17') par un axe de rotation (17"), ces parties formant un ensemble mobile guidé en translation dans un corps creux (16') solidaire rigidement de la traverse (16) concernée, ce dans la direction de manoeuvre dudit verrou (17), ce dernier étant situé, en l'absence de contrainte et à l'état déployé de la paire de roues (15) associée, dans une position de verrouillage par engagement dans un élément fixe du châssis (9) et étant déplacé progressivement en position déverrouillée par roulement des galets (17') sur des portions d'extrémité en forme de rampes inclinées (11') des moyens (11) fonctionnellement complémentaires des mécanismes (10), sous forme de rails transversaux du chariot mère (2), la position déverrouillée étant atteinte immédiatement avant que les moyens de roulement (5) concernés ne commencent à être sollicités vers leur position repliée.

9. Dispositif selon l'une quelconque des revendications 7 et 8, **caractérisé en ce que** le chariot mère (2) comporte deux chemins de circulation (18) parallèles pour les paires de roues (15) des moyens de roulement (5), préférentiellement sous forme de rails de circulation guidée, s'étendant transversalement d'un côté à l'autre du chariot mère (2) dans l'emplacement de réception (6), et autorisant un roulement desdites roues (15) avec maintien en position repliée, chaque chemin de circulation (18) comportant à chacune de ses extrémités opposées une portion de rampe inclinée (18') destinée à provoquer, en fonction de la direction de déplacement du chariot fille (3), un repliement ou un déploiement progressif des paires de roues (15) lors de leur roulement sur ces portions de rampe (18'), ce en synchronisme avec l'actionnement du mécanisme (10) de verrouillage/déverrouillage associé à la paire de roues (15) concernée.

10. Dispositif selon l'une quelconque des revendications 7 et 8, **caractérisé en ce que** les moyens de roulement (5) sont déplacés en position repliée, et maintenus dans cette position, par action des ensembles [corps creux (16') / axe de rotation (17") / galets (17')] sur les traverses (16) correspondantes lorsque les galets (17') circulent en appui sur les rails (11), les roues (15) étant flottantes dès le début de leur repliement ou soulèvement et maintenues en position autour de leur axe de montage sur le châssis (9) du chariot fille (3) en circulant dans des rails (18).

11. Dispositif de chariot composite selon l'une quelconque des revendications 2 ou 3 à 10, pour autant qu'elles dépendent de la revendication 2, **caractérisé en ce que** l'élément de guidage (12) du chariot fille (3) consiste en une barre (9") s'étendant sous le plateau ou le châssis (9) dans la direction longitudinale (X') dudit chariot fille (3) et **en ce que** les moyens (8) complémentaires de guidage du chariot mère (2) consistent en une ou des paires de rouleaux ou de galets montée(s) au moins au niveau de chaque côté longitudinal dudit chariot mère (2) et définissant entre eux un chemin de guidage transversal pour le chariot fille (3), de manière à ce que les axes longitudinaux (X et X') des chariots mère et fille (2 et 3) soient perpendiculaires entre eux lors des mouvements d'engagement et de désengagement des deux chariots.

12. Dispositif de chariot composite selon la revendication 8 et la revendication 11, **caractérisé en ce que** l'élément fixe du châssis (9) du chariot fille (3) engagé par le verrou (17) de chaque mécanisme de verrouillage/déverrouillage (10), pour le blocage en position déployée des roues (15), correspond à l'élément de guidage (12) en forme de barre longitudinale (9"), lequel est pourvu de sites d'ancrage ou d'orifices de réception (12') correspondants.

13. Dispositif de chariot composite selon l'une quelconque des revendications 1 à 12, **caractérisé en ce que** le chariot mère (2) comprend un timon frontal (19) pour son pilotage et son accrochage et un moyen d'accrochage (19'), mâle ou femelle, arrière, permettant la réalisation de trains de chariots composites (1) par accrochages successifs.
